# EUROPÄISCHE PATENTSCHRIFT

(11) **EP 1 215 414 B1**
(45) Veröffentlichungstag und Bekanntmachung des Hinweises auf die Patenterteilung: **18.02.2004**
(21) Anmeldenummer: 01129753.8
(22) Anmeldetag: 13.12.2001
(51) Int. Cl.: F16F 9/512, F16F 9/516

(54) **Kolben-Zylinderaggregat mit einer geschwindigkeitsabhängigen Dämpfkraft**
Piston-cylinder aggregate with a damping force proportional to the speed
Ensemble piston-cylindre avec une force d'amortissement proportionnelle à la vitesse

(30) Priorität: 16.12.2000 DE 10062987
(43) Veröffentlichungstag der Anmeldung: 19.06.2002
(73) Patentinhaber: Stabilus GmbH, D-56070 Koblenz (DE)
(72) Erfinder: Müller, Thomas, 56427 Siershahn (DE)
(74) Vertreter: Herzog, Markus, Dipl.-Phys. Dr.

(56) Entgegenhaltungen:
- DE-A- 2 800 630
- DE-C- 545 334
- FR-A- 844 168
- US-A- 5 730 260

## Beschreibung

Die Erfindung betrifft ein Kolben-Zylinderaggregat mit einer geschwindigkeitsabhängigen Dämpfkraft gemäß dem Oberbegriff von Patentanspruch 1.

Aus der DE 198 01 722 A1 ist ein Kolben-Zylinderaggregat mit einer geschwindigkeitsabhängigen Dämpfkraft bekannt, das eine ortsfeste Zwischenscheibe aufweist, in dem ein geschwindigkeitsabhängig schließendes Ventil angeordnet ist. Das Ventil umfasst einen Ventilkörper mit einer konischen Ventilfläche, wobei der Ventilkörper von einer Kegelfeder in Öffnungsrichtung vorgespannt ist. Bei dieser Bauweise besteht der Nachteil, dass durch die ortsfeste Zwischenscheibe ein Hubverlust in der Größenordnung der axialen Ausstreckung des Arbeitsraums zwischen der Zwischenscheibe und dem Trennkolben vorliegt.

Die DE-PS 545 334 beschreibt eine Flüssigkeitsbremse, umfassend eine Kolbenstange, die innerhalb eines mit einem Dämpfmedium gefüllten Zylinders axial beweglich geführt ist, wobei an der Kolbenstange ein Kolben angeordnet ist, der den Zylinder in einen kolbenstangenseitigen und einen kolbenstangenfernen Arbeitsraum unterteilt, wobei die beiden Arbeitsräume durch mindestens einen Strömungskanal miteinander verbunden sind, der in Abhängigkeit der axialen Position eines von einer Feder in Öffnungsrichtung vorgespannten Ventilkörpers angesteuert wird, wobei der Ventilkörper staudruckabhängig in die geschlossene Position bewegbar ist und den mindestens einen Strömungskanal in seinem Durchlassquerschnitt zumindest reduziert. Der Ventilkörper weist eine ebene Schließfläche auf, die auf einer Stirnfläche des Kolbens zur Anlage kommt. Es ist keine Blockierung der Kolbenstange gewünscht, so dass eventuelle Leckströme zwischen der Stirnfläche des Kolbens und der Schließfläche des Ventilkörpers geduldet werden können. Einen Hinweis auf die Ausgestaltung eines Arbeitsraums ist in dieser Schrift nicht enthalten.

Aufgabe der vorliegenden Erfindung ist es, ein möglichst kurzbauendes Kolben-Zylinderaggregat zu realisieren, das bei Bedarf eine vollständige Blockierung der beiden Arbeitsräume ermöglicht.

Erfindungsgemäß wird die Aufgabe dadurch gelöst, dass der Kolben stirnseitig eine Ventilsitzfläche aufweist, auf die der Ventilkörper bei maximal geschlossener Position mit einer konusförmigen Schließfläche zur Anlage kommt.

Die konusförmige Schließfläche ermöglicht eine sehr zuverlässige Dichtfunktion, die auch bei einem geringen Schiefstand des Ventilkörpers erhalten bleibt, da sich der Ventilkörper an der Ventilsitzfläche selbst zentriert.

Im Hinblick auf eine möglichst weitgehende Unterbindung einer Strömungsverbindung zwischen den von dem Kolben getrennten Arbeitsräumen ist vorgesehen, dass der Ventilkörper auf einem Zapfen geführt ist, wobei zwischen dem Ventilkörper und einer Führungsfläche des Zapfens eine Dichtung angeordnet ist. Der Zapfen kann auch von einer Hülse gebildet werden, die auf der Kolbenstange gehalten wird.

In weiterer vorteilhafter Ausgestaltung weist der Kolben eine Sacklochöffnung auf, die die Feder für den Ventilkörper aufnimmt, wobei sich ausgehend von einem Boden der Sacklochöffnung der mindestens eine Strömungskanal erstreckt. Die Sacklochöffnung übernimmt zwei Funktionen. Zum einen wird die Feder radial geführt und zum anderen kann der Sacklochkanal relativ kurz gehalten werden, so dass temperaturbedingte Viskositätsänderungen nur geringe Dämpfkraftschwankungen mit sich bringen.

Zusätzlich ist die Feder als eine Kegelfeder ausgeführt, wobei das Ende der Kegelfeder mit dem größeren Windungsdurchmesser am Boden der Sacklochöffnung angeordnet ist und der Strömungskanal radial innerhalb der bodenseitigen Endwindung der Kegelfeder ausgeführt ist. Dadurch wird der vorhandene Bauraum sehr gut ausgenutzt.

Gemäß einem vorteilhaften Unteranspruch besteht der Ventilkörper aus einem Kunststoff. Damit soll zusätzlich eine bessere Abdichtung des Ventilkörpers auf der Ventilsitzfläche erreicht werden. Auch die Geräuschentwicklung bei einer hohen Schließgeschwindigkeit des Ventilkörpers wird materialbedingt positiv beeinflusst.

Um das Ventil, das sich staudruckabhängig in die Schließposition bewegt, mit möglichst geringem Aufwand an verschiedene Anwendungsfälle anpassen zu können, ist der Ventilkörper in Öffnungsrichtung von der Feder gegen einen axial verstellbaren Anschlag vorgespannt.

Als weitere Möglichkeit kann vorgesehen sein, dass die Ventilsitzfläche relativ zum Kolben axial verstellbar ausgeführt ist. Damit wird erreicht, dass die Schließbewegung bei ansonsten konstanter Vorspannkraft der Feder, die auf den Ventilkörper wirkt, unabhängig von der Vorspannkraft der Feder verstellt werden.

Dazu ist vorteilhafterweise vorgesehen, dass die Ventilsitzfläche Teil eines Ventilsitzringes ist.

Für eine stufenlose Einstellung der Schließbewegung des Kolbens in Abhängigkeit des Staudrucks geht der Ventilsitzring eine Gewindeverbindung mit dem Kolben ein.

Um die axiale Baulänge, die bisher für einen Arbeitsraum zwischen der Trennscheibe und dem Ausgleichsraum benötigt wurde, einzusparen, ist zwischen dem Kolben und dem kolbenstangenausfahrseitigen Ende des Zylinders ein Trennkolben angeordnet, der einen Ausgleichsraum von dem kolbenstangenseitigen Arbeitsraum trennt. Im Falle der Blockierung stützt sich der Kolben hydraulisch am Boden des Zylinders ab.

Anhand der folgenden Figurenbeschreibung soll die Erfindung näher erläutert werden.

Es zeigt:
- Fig. 1: Kolben-Zylinderaggregat mit einer Ausschnittdarstellung
- Fig. 2 u. 4: Erfindungsgemäße Kolbenvarianten

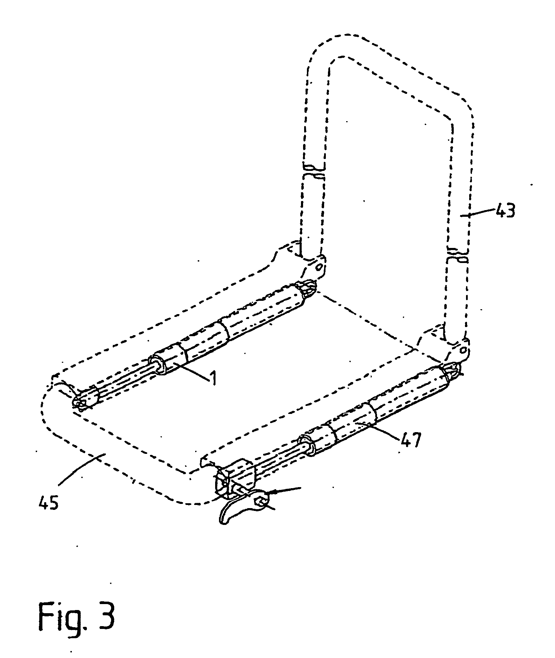

- Fig. 3: Einbaubeispiel des Kolben-Zylinderaggregates

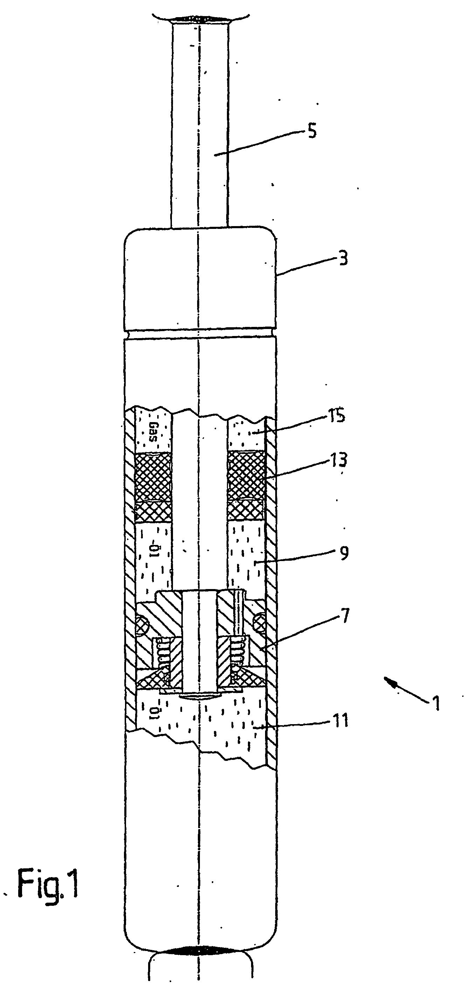

Die Fig. 1 zeigt ein Kolben-Zylinderaggregat 1, das einen Zylinder 3 aufweist, in dem eine Kolbenstange 5 axial beweglich angeordnet ist. Ein Kolben 7, der ortsfest mit der Kolbenstange verbunden ist, trennt den Zylinder in einen kolbenstangenseitigen Arbeitsraum 9 und einen kolbenstangenfernen Arbeitsraum 11. Beide Arbeitsräume sind mit einem Dämpfmedium, in der Regel auf Ölbasis, gefüllt. Ein Trennkolben 13 separiert einen Ausgleichsraum 15 von dem kolbenstangenseitigen Arbeitsraum 9. Der Ausgleichsraum steht unter der Vorspannung eines Gases, so dass auf die Kolbenstange stets eine Ausschubkraft wirksam ist. Alternativ kann im Ausgleichsraum auch eine Federvorspannung verwendet werden.

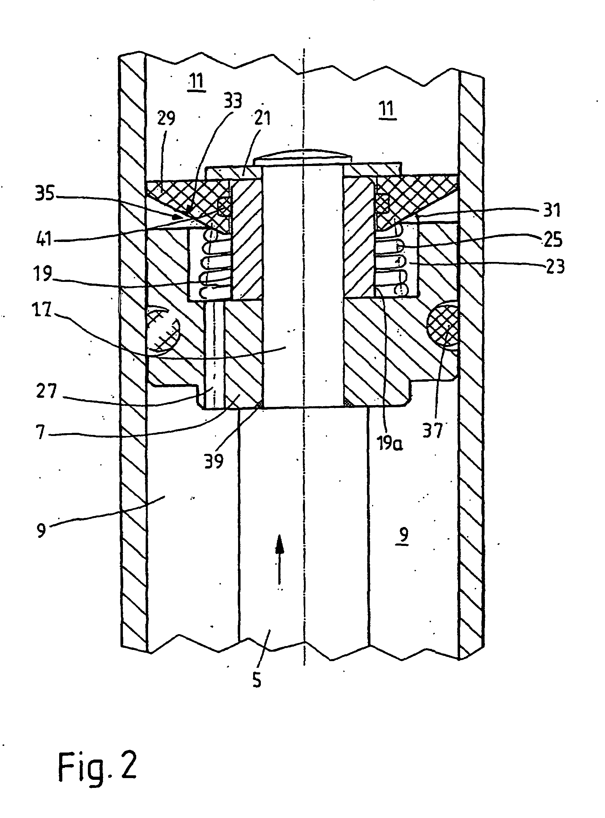

In der Fig. 2 ist der Kolben 7 in der Version nach Fig. 1 vergrößert dargestellt. Der Kolben 7 ist auf einem Zapfen 17 der Kolbenstange 5 axial fixiert. Eine Führunghülse 19 in Verbindung mit einer Anschlagscheibe 21 wird zusammen mit dem Kolben gegen einen Absatz der Kolbenstange 5 verspannt. Der Kolben verfügt über eine Sacklochöffnung 23, in der eine Feder 25 angeordnet ist. Die Sacklochöffnung weist einen Strömungskanal 27 auf, der in Abhängigkeit der Betriebsstellung eines Ventilkörpers 29 die beiden Arbeitsräume 9; 11 verbindet. Der aus einem Kunststoff bestehenden Ventilkörper 29 wird von der Feder 25 gegen die Anschlagscheibe 21 in Öffnungsrichtung vorgespannt. Am Boden der Sacklochöffnung stützt sich die Feder, die als Kegelfeder ausgeführt ist, ab, wobei die Endwindung der Kegelfeder radial außerhalb eines Teilkreises verläuft, auf dem der Strömungskanal ausgeführt ist. Dämpfmedium kann in einen Spalt 31 zwischen einer konusförmigen Schließfläche 33 des Ventilkörpers 29 und einer stirnseitigen Ventilsitzfläche 35 des Kolbens 7 in die Sacklochöffnung des Kolbens und dann durch den mindestens einen Strömungskanal weiter in den Arbeitsraum 9 fließen. Die Schließfläche 33 des Ventilkörpers und die Ventilsitzfläche 35 weisen im Idealfall eine Linienberührung auf, so dass in Verbindung mit dem aus Kunststoff bestehenden und damit in Grenzen elastischen Ventilkörper eine sehr zuverlässige Dichtfunktion gewährleistet ist.

Ein Kolbenring 37, eine Ringdichtung 39 am Absatz der Kolbenstange sowie eine Dichtung 41 an der Innenseite des Ventilkörpers 29 zu einer Führungsfläche 19a der Führungshülse 19 sorgen dafür, dass keine undefinierten Leckströme zwischen den beiden Arbeitsräumen auftreten. Die Dichtung 41 lässt ein etwas größeres Führungsspiel zwischen der Führungsfläche 19a und dem Ventilkörper 29 zu. Daraus kann man eine gewisse Winkelbeweglichkeit des Ventilkörpers zur Führungsfläche ausnutzen, um die Dichtfunktion des Ventilkörpers im Zusammenwirken auch bei einer u. U. leicht ungenau gearbeiteten Ventilsitzfläche des Kolbens zu steigern.

Bei einer Einfahrbewegung der Kolbenstange 5 in den Zylinder 3 gemäß der Pfeilrichtung bildet sich im kolbenstangenfernen Arbeitsraum 11 geschwindigkeitsabhängig ein Staudruck, der auch auf den Ventilkörper in Richtung der Ventilsitzfläche 35 des Kolbens 7 wirkt. Ab einer bestimmten Einfahrgeschwindigkeit bzw. einer bestimmten Staudruckkraft auf den Ventilkörper 29 bewegt sich dieser auf die Ventilsitzfäche 35 des Kolbens 7 und schließt den Spalt 31zwischen dem Ventilkörper und dem Kolben ab. Damit wird die weitere Einfahrbewegung der Kolbenstange zuverlässig verhindert.

Eine derartige Funktion wird z. B. bei einem Fahrzeugsitz benötigt, der mit dem Kolben-Zylinderaggregat 1 verstellt werden kann. Zwischen einer Rückenlehne 43 und einem Basisteil 45 ist das Kolben-Zylinderaggregat 1 angeordnet. Ein weiteres willkürlich blockierbares Kolben-Zylinderaggregat 47, beispielsweise in der Ausführung nach der DE 40 09 100 A1, ist dem Kolben-Zylinderaggregat 1 funktional parallel geschaltet. Bei einer sehr großen Verzögerung wirkt die Massenträgheit einer auf einem Sitz befindlichen Person gegen die Rücklehne, wodurch die Kolbenstangen beider Kolben-Zylinderaggregate 1; 47 sehr rasch beschleunigt werden. Unabhängig von der Auslösestellung des Kolben-Zylinderaggregates 47 wird das Kolben-Zylinderaggregat 1 aufgrund des großen Staudrucks im Arbeitsraum 11 in die vorstehend beschriebene Blockierstellung gebracht.

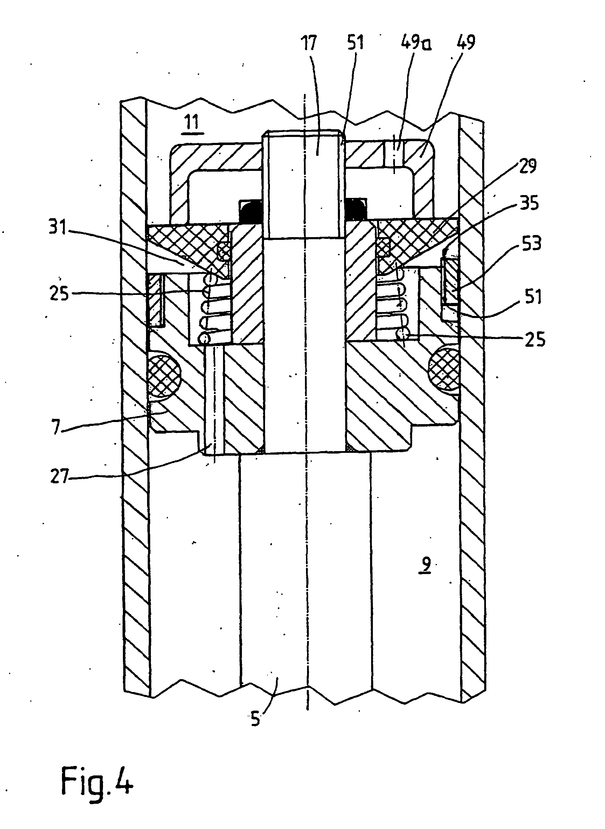

Die Ausführung des Kolbens 7 gemäß der Fig. 4 basiert auf der Variante nach der Fig. 2. Abweichend wird für den Ventilkörper 29 ein axial verstellbarer Anschlag 49 eingesetzt, der mit dem Zapfen 17 der Kolbenstange 7 eine Gewindeverbindung 51 eingeht und damit in seiner Position relativ zum Kolben stufenlos verstellbar ist. In dem Anschlag ist eine Durchlassöffnung 49a ausgeführt, um die gesamte dem Arbeitsraum 11 zugewandte Fläche mit dem Betriebsdruck im Arbeitsraum 11 beaufschlagt ist. Damit wird die Feder 25 in ihrer Vorspannung verändert und die Breite des Spaltes 31 wird ebenfalls beeinflusst. Damit ist eine Anpassung des Schließverhaltens des Ventilkörpers 29 möglich.

Alternativ oder in Kombination kann der Kolben 7 eine axial verstellbare Ventilsitzfläche 35 weisen, die von einem Ventilsitzring 53 gebildet wird. Der Ventilsitzring geht mit dem Kolben eine Gewindeverbindung 51 ein und kann folglich ebenfalls stufenlos verstellt werden, um den Spalt 31 einzustellen. In der linken Schnitthälfte ist der Ventilsitzring mit der maximal geöffneten Breite des Spaltes dargestellt, hingegen in der rechten Schnitthälfte eine Axialverstellung des Ventilsitzringes vorgenommen wurde. Der wesentliche funktionale Unterschied im Vergleich zum axial verstellbaren Anschlag 49 besteht darin, dass bei einer Verstellung der Ventilsitzfläche 35 nur der Spalt 31 in seiner Breite verändert wird. Die Federkraft der Feder 25 bleibt unverändert. Bei einer Kombination beider Verstellmöglichkeiten kann man die Feder 25 mit dem verstellbaren Anschlag 49 in ihrer Vorspannung und damit in ihrer Öffnungskraft ändern und den Verstellweg des Anschlags mit dem Ventilsitzring 54wieder nachführen, um die Breite des Spaltes 31 konstant zu halten.

Das Schließverhalten des Ventilkörpers 29 wird dann unahängig von der Kolbenstangenbewegungsgeschwindigkeit von der Federkraft der Feder 25, der Querschnittsfläche des Spaltes 31 und der Querschnittsfläche des Strömungskanals 27 bestimmt.

Bei beiden Ausführungsvarianten nach den Fig. 2 und 4 stützt sich die Kolbenstange 7 bei einem Blockierstellung des Ventilkörpers 29 auf einer Dämpfmediumsäule im Arbeitsraum 11 ab, die wiederum unmittelbar bis am Boden des Zylinders 3 ansteht.

## Patentansprüche

1. Kolben-Zylinderaggregat (1) mit einer geschwindigkeitsabhängigen Dämpfkraft, umfassend eine Kolbenstange (5), die innerhalb eines mit einem Dämpfmedium gefüllten Zylinders (3) axial beweglich geführt ist, wobei an der Kolbenstag (5) ein Kolben (7) befestigt ist, der den Zylinder (3) in einen kolbenstangenseitigen (9) und einen kolbenstangenfernen (11) Arbeitsraum unterteilt, wobei die beiden Arbeitsräume (9,11) durch mindestens einen Strömungskana (27) miteinander verbunden sind, der in Abhängigkeit der axialen Position eines von einer Feder (20) in Öffnungsrichtung vorgespannten Ventilkörpers (29) so angesteuert wird, wobei der Ventilkörper (29) staudruckabhängig in die geschlossene Position auf eine Ventilsitzfläche (35) bewegbar ist und wobei in der geschlossenen Position der Durchlassquerschnitt des mindestens einen Strömungskanals (27) zumindest reduziert wird,
**dadurch gekennzeichnet,**
**dass** der Kolben (7) stirnseitig die Ventilsitzfläche (35) bildet, auf die der Ventilkörper (29) bei maximal geschlossener Position mit einer konusförmigen Schließfläche (33) zur Anlage kommt.

2. Kolben-Zylinderaggregat nach Anspruch 1,
**dadurch gekennzeichnet,**
**dass** der Ventilkörper (29) auf einem Zapfen (17) geführt ist, wobei zwischen dem Ventilkörper (29) und einer Führungsfläche (19a) des Zapfens (19; 17) eine Dichtung (41) angeordnet ist.

3. Kolben-Zylinderaggregat nach den Ansprüchen 1 oder 2,
**dadurch gekennzeichnet,**
**dass** der Kolben (7) eine Sacklochöffnung (23) aufweist, die die Feder (25) für den Ventilkörper (29) aufnimmt, wobei sich ausgehend von einem Boden der Sacklochöffnung (23) der mindestens eine Strömungskanal (27) erstreckt.

4. Kolben-Zylinderaggregat nach Anspruch 3,
**dadurch gekennzeichnet,**
**dass** die Feder (25) als eine Kegelfeder ausgeführt ist, wobei das Ende der Kegelfeder mit dem größeren Windungsdurchmesser am Boden der Sacklochöffnung (23) angeordnet ist und der Strömungskanal (27) radial innerhalb der bodenseitigen Endwindung der Kegelfeder ausgeführt ist.

5. Kolben-Zylinderaggregat nach einem der Ansprüche 1 bis 4,
**dadurch gekennzeichnet,**
**dass** der Ventilkörper (29) aus einem Kunststoff besteht.

6. Kolben-Zylinderaggregat nach einem der Ansprüche 1 bis 5,
**dadurch gekennzeichnet,**
**dass** der Ventilkörper (29) in Öffnungsrichtung von der Feder (25) gegen einen axial verstellbaren Anschlag (49) vorgespannt ist.

7. Kolben-Zylinderaggregat nach einem der Ansprüche 1 bis 6,
**dadurch gekennzeichnet,**
**dass** die Ventilsitzfläche (35) relativ zum Kolben (7) axial verstellbar ausgeführt ist.

8. Kolben-Zylinderaggregat nach Anspruch 7,
**dadurch gekennzeichnet,**
**dass** die Ventilsitzfläche (35) Teil eines Ventilsitzringes (53) ist.

9. Kolben-Zylinderaggregat nach Anspruch 8,
**dadurch gekennzeichnet,**
**dass** der Ventilsitzring (53) eine Gewindeverbindung (51) mit dem Kolben (7) eingeht.

10. Kolben-Zylinderaggregat nach einem der Ansprüche 1 bis 9,
**dadurch gekennzeichnet,**
**dass** zwischen dem Kolben (7) und dem kolbenstangenausfahrseitigen Ende des Zylinders (3) ein Trennkolben (13) angeordnet ist, der einen Ausgleichsraum (15) von dem kolbenstangenseitigen (9) Arbeitsraum trennt.

## Claims

1. A piston-cylinder assembly (1) having a speed-dependent damping force, comprising a piston rod (5) which is guided axially movably inside a cylinder (3) filled with a damping medium, wherein a piston (7) is mounted on the piston rod (5), which piston divides the cylinder (3) into a working chamber (9) on the piston-rod side and a working chamber (11) remote from the piston rod, wherein the two working chambers (9,11) are in communication with one another through at least one flow passage (27) which is so controlled as a function of the axial position of a valve body (29) preloaded into an open position by a spring (20), wherein the valve body (29) can be moved, dependent on dynamic pressure, into a closed position on a valve seat surface (35), and wherein in the closed position the passage cross-section of the at least one flow passage (27) is at least reduced, **characterised in**
**that** the piston (7) forms the valve seat surface (35) at one end face, on which the valve body (29) is applied with a conical closing surface (33) in the maximum closed position.

2. A piston-cylinder assembly according to Claim 1, **characterised in that** the valve body (29) is guided on a spigot (17), wherein a seal (41) is disposed between the valve body (29) and a guide surface (19a) of the spigot (19;17).

3. A piston-cylinder assembly according to Claim 1 or 2, **characterised in that** the piston (7) has a blind hole opening (23) which accommodates the spring (25) for the valve body (29), wherein the at least one flow passage (27) extends starting from one end of the blind hole opening (23).

4. A piston-cylinder assembly according to Claim 3, **characterised in that** the spring (25) is in the form of a conical spring, wherein the end of the conical spring is arranged with the larger coil diameter at the bottom of the blind hole opening (23) and the flow passage (27) is formed radially inside the end coil of the conical spring at the bottom end.

5. A piston-cylinder assembly according to any one of Claims 1 to 4, **characterised in that** the valve body (29) consists of plastics material.

6. A piston-cylinder assembly according to one of Claims 1 to 5, **characterised in that** the valve body (29) is preloaded in the opening direction by the spring (25) against an axially adjustable stop (49).

7. A piston-cylinder assembly according to any one of Claims 1 to 6, **characterised in that** the valve seat surface (35) is designed to be axially adjustable relative to the piston (7).

8. A piston-cylinder assembly according to Claim 7, **characterised in that** the valve seat surface (35) is part of a valve seat ring (53).

9. A piston-cylinder assembly according to Claim 8, **characterised in that** the valve seat ring (53) combines a threaded connection (51) with the piston (7).

10. A piston-cylinder assembly according to any one of Claims 1 to 9, **characterised in that** a separating piston (13), which separates a compensating chamber (15) from the working chamber (9) on the piston-rod side, is disposed between the piston (7) and the end of the cylinder (3) from which the piston rod extends.

## Revendications

1. Elément à piston et cylindre (1) avec une force d'amortissement dépendant de la vitesse, comprenant une tige de piston (5) qui fait l'objet d'un guidage mobile axial à l'intérieur d'un cylindre (3) rempli d'un fluide d'amortissement, un piston (7), étant fixé sur la tige de piston (5) qui subdivise le cylindre (3) en un compartiment de travail (9) situé du côté de la tige de piston et en un compartiment de travail (11) éloigné de la tige de piston, les deux compartiments de travail (9, 11) étant reliés entre eux par au moins un canal d'écoulement (27), qui est ainsi activé en fonction de la position axiale d'un corps de vanne (29) mis en précontrainte en direction d'ouverture par un ressort (25), le corps de vanne (29) pouvant être déplacé en fonction de la pression de refoulement dans la position fermée sur une surface du siège de vanne (35) et la section de passage d'au moins un canal d'écoulement (27) étant au moins réduite dans la position fermée, **caractérisé en ce que** le piston (7) forme sur son côté frontal la surface du siège de vanne (35) sur laquelle, en position de fermeture maximale, le corps de vanne (29) s'appuie avec une surface de fermeture en forme de cône (33).

2. Elément à piston et cylindre selon la revendication 1, **caractérisé en ce que** le corps de vanne (29) est guidé sur un tourillon (17), un joint (41) étant disposé entre le corps de vanne (29) et une surface de guidage (19a) du tourillon (19 ; 17).

3. Elément à piston et cylindre selon la revendication 1 ou 2, **caractérisé en ce que** le piston (7) comprend une ouverture borgne (23) recevant le ressort (25) pour le corps de vanne (29), au moins un canal d'écoulement (27) s'étendant à partir d'un fond de l'ouverture borgne (23).

4. Elément à piston et cylindre selon la revendication 3, **caractérisé en ce que** le ressort (25) est réalisé comme ressort conique, l'extrémité du ressort conique ayant le plus grand diamètre de spire étant disposé sur le fond de l'ouverture borgne et le canal d'écoulement (27) étant formé dans le sens radial à l'intérieur de la spire extrême du ressort conique située du côté du fond.

5. Elément à piston et cylindre selon l'une quelconque des revendications 1 à 4, **caractérisé en ce que** le corps de vanne (29) se compose d'un matériau synthétique.

6. Elément à piston et cylindre selon l'une quelconque des revendications 1 à 5, **caractérisé en ce qu'**en direction d'ouverture le corps de vanne (29) est mis en précontrainte par le ressort (25) contre une butée (49) pouvant faire l'objet d'un réglage axial.

7. Elément à piston et cylindre selon l'une quelconque des revendications 1 à 6, **caractérisé en ce que** la surface du siège de vanne (35) est réalisée pour être réglable dans le sens axial par rapport au piston (7)

8. Elément à piston et cylindre selon la revendication 7, **caractérisé en ce que** la surface du siège de vanne (35) est une partie d'une bague du siège de vanne (53).

9. Elément à piston et cylindre selon la revendication 8, **caractérisé en ce que** la bague du siège de vanne (53) fait l'objet d'une liaison filetée (51) avec le piston (7).

10. Elément à piston et cylindre selon l'une quelconque des revendications 1 à 9, **caractérisé en ce qu'**entre le piston (7) et l'extrémité du cylindre (3) située du côté de la sortie de la tige de piston est disposé un piston de séparation (13), qui sépare un compartiment de compensation (15) du compartiment de travail (9) situé du côté de la tige de piston.
